Europäisches Patentamt

European Patent Office

Office européen des brevets

(19)

(11) **EP 0 792 460 B1**

(12) **EUROPÄISCHE PATENTSCHRIFT**

(45) Veröffentlichungstag und Bekanntmachung des Hinweises auf die Patenterteilung:
**30.08.2000 Patentblatt 2000/35**

(51) Int Cl.[7]: **G01P 3/66**

(86) Internationale Anmeldenummer:
**PCT/EP96/04048**

(21) Anmeldenummer: **96931809.6**

(22) Anmeldetag: **16.09.1996**

(87) Internationale Veröffentlichungsnummer:
**WO 97/10511 (20.03.1997 Gazette 1997/13)**

(54) **VERFAHREN UND EINRICHTUNG ZUR HOCHGENAUEN BESTIMMUNG DER GESCHWINDIGKEIT VON SCHIENENFAHRZEUGEN**

METHOD AND MEANS FOR HIGH PRECISION DETERMINATION OF THE SPEED OF RAIL VEHICLES

PROCEDE ET DISPOSITIF PERMETTANT LA DETERMINATION AVEC UNE PRECISION ELEVEE DE LA VITESSE DE VEHICULES SUR RAILS

(84) Benannte Vertragsstaaten:
**AT BE CH DE DK ES FI FR GB IT LI NL SE**

(30) Priorität: **16.09.1995 EP 95114611**

(43) Veröffentlichungstag der Anmeldung:
**03.09.1997 Patentblatt 1997/36**

(73) Patentinhaber:
• **Alcatel SEL Aktiengesellschaft**
  **70435 Stuttgart (DE)**
• **FRAUNHOFER-GESELLSCHAFT ZUR FÖRDERUNG DER ANGEWANDTEN FORSCHUNG E.V.**
  **80636 München (DE)**

(72) Erfinder: **FEHRENBACH, Hermann**
  **D-76761 Rülzheim (DE)**

(74) Vertreter: **Knecht, Ulrich Karl, Dipl.-Ing. et al**
  **Alcatel**
  **Intellectual Property Department, Stuttgart**
  **Postfach 30 09 29**
  **70449 Stuttgart (DE)**

(56) Entgegenhaltungen:
  **DE-A- 4 302 093        GB-A- 2 117 937**

  • **JOURNAL A, Bd. 21, Nr. 3, Juli 1980, ANTWERPEN, Seiten 104-111, XP002021922 J.L. DE KROES: "PRECISE MEASUREMENTS OF SPEED AND LENGTH OF VEHICLES ..."**
  • **SIGNAL + DRAHT, Bd. 77, Nr. 4, 1984, DARMSTADT, Seiten 72-77, XP002021923 HOFFMANN ET AL: "NEUE ZÄHLPUNKTE (Zp 30) FÜR ACHSZÄHLER" in der Anmeldung erwähnt**

EP 0 792 460 B1

**Beschreibung**

Die Erfindung betrifft ein Verfahren gemäß dem Oberbegriff des Patentanspruchs 1 sowie eine Einrichtung zur Durchführung dieses Verfahrens.

Ein solches Verfahren ist z. B. aus einem Aufsatz von W. Märtens in "Siemens-Zeitschrift" 45 (1971), Beiheft "Bahntechnik", Seite 171 bis 173 bekannt. Anstelle der dort verwendeten Doppel impulsgeber können jedoch auch elektromagnetische Schienenkontakte verwendet werden, wie sie in einem Aufsatz von G. Hoffmann und H. Uebel in "Signal + Draht" 77 (1985), Heft 4 auf Seite 72 bis 77 beschrieben sind.

Bei einer derartig ausgeführten Geschwindigkeitsbestimmung wird die Genauigkeit durch die Lage der Start- und Endpunkte (Triggerpunkte) der Laufzeitmessung bestimmt. Veränderungen der Justage der Schienenkontakte, der Schwellenwerte oder der Signalverstärkung wirken sich ebenso wie Unterschiede in der Radbeschaffenheit unmittelbar auf die Lage der Triggerpunkte aus und gehen damit direkt in die Laufzeitmessung ein. Zusätzlich wirken sich Störungen und Rauschen auf die Genauigkeit der Laufzeitmessung aus.

Es ist deshalb Aufgabe der Erfindung, ein Verfahren und eine Einrichtung zu dessen Durchführung anzugeben, die eine wesentlich höhere Genauigkeit bei der Geschwindigkeitsbestimmung von Schienenfahrzeugen ermöglichen.

Diese Aufgabe wird hinsichtlich des Verfahrens durch die Merkmale des Patentanspruchs 1, hinsichtlich einer zur Durchführung des Verfahrens geeigneten Einrichtung durch die Merkmale des Patentanspruchs 5 gelöst.

Durch die Aufzeichnung des annährend parabelförmigen Impulsverlaufes im Bereich jenseits der für die Erkennung eines Raddurchganges maßgebenden Schwelle und die optimale Annäherung einer mathematisch definierten Parabel an diesen Verlauf läßt sich ein Triggerpunkt gewinnen, dessen Lage von den vorstehend genannten Einflüssen kaum berührt wird. So gleichen sich lokale Abweichungen des Signalverlaufes von der Parabelform vielfach gegenseitig aus, so daß die angenäherte Parabel in ihrer Lage weitestgehend unverändert bleibt und ihr Scheitelpunkt einen idealen Triggerpunkt darstellt, dessen Zeitkoordinate in numerischer Form dem die Annäherung vornehmenden Rechner entnehmbar ist. Nach Vorliegen der an die aufgezeichneten Impulsverläufe angenäherten Parabeln läßt sich die Laufzeit somit als Differenz der Zeitkoordinaten der Scheitelpunkte der beiden Parabeln dem Rechner entnehmen.

Verfahren zur Annäherung von Meßkurven durch mathematische Funktionen (sogenanntes curve-fitting) sind im übrigen für sich bekannt. Siehe hierzu z. B. Programmesammlung William H. Press et al. "Numerical Recipes in C", erschienen 1988 bei Cambridge University Press, published by the Press Syndicate of the University of Cambridge. The Pitt Building, Trumpington Street, Cambridge CB21RP, GB, Seiten 528-535.

Ausgestaltungen des Verfahrens nach der Erfindung sind den Unteransprüchen 2 und 3 zu entnehmen.

Anspruch 4 sieht als Weiterbildung der Erfindung eine Berechnung des Kreuzkorrelationskoeffizienten zwischen dem jeweils aufgezeichneten Signalverlauf eines Schienenkontaktes und der ihm optimal angepaßten Parabel und dessen Vergleich mit einem vorgebenen Sollwert vor. Wird dieser Vergleich an den Signalen beider Schienenkontakte vorgenommen, so ist bei Erhalt von Kreuzkorrelationskoeffizienten, die im Betrag höher als der jeweilige Kreuzkorrelations-Sollwert liegen, sichergestellt, daß der Geschwindigkeitsbestimmung ein Raddurchgang und nicht etwa eine Störung durch eine Wirbelstrombremse oder eine anderweitige Störung zugrundegelegen hat.

Anspruch 5 beschreibt eine einfache Einrichtung zur Durchführung des Verfahrens nach Anspruch 1. Es lassen sich nahezu alle Verfahrensschritte mittels eines Rechners oder, falls dies aus Sicherheitsgründen notwendig ist, eines Mehrrechnersystems ausführen.

Das Verfahren nach der Erfindung sowie die zu dessen Durchführung geeignete Einrichtung sollen nachfolgend anhand eines Ausführungsbeispiels mit Hilfe von zwei Figuren ausführlich beschrieben werden.

Die Figuren zeigen im einzelnen:

Fig. 1: Unterschiedliche Radimpulse und an den jeweiligen Impulsverlauf angenäherte Parabeln.

Fig. 2: Ein Ablaufschema des erfindungsgemäßen Verfahrens.

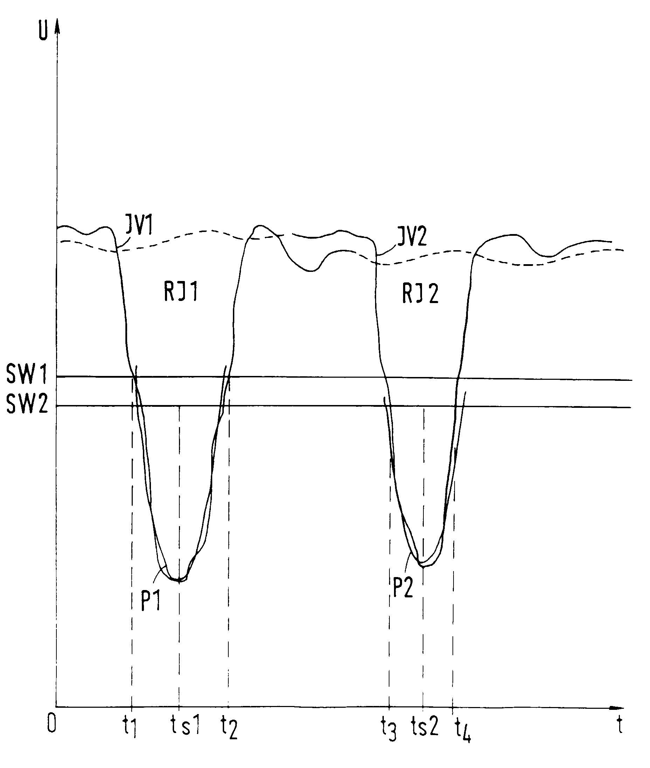

In Fig. 1 sind Impulsverlaufskurven JV1, JV2 dargestellt, wie sie bei Durchgang eines Rades durch die Magnetfelder zweier in vorgegebenen Abstand hintereinander angeordneter elektromagnetischer Schienenkontakte an deren Signalausgängen beobachtet werden können. Entlang der Abszisse ist hier die Zeit t, entlang der Ordinate die Signalamplitude U aufgetragen. Es ist deutlich erkennbar, daß beide Kurven sogenannte "Radabsenkungen" RJ1 bzw. RJ2 zeigen, Amplitudenabsenkungen bis weit unter einen vorgegebenen Schwellenwert SW1 bzw. SW2, der für die einzelnen Schienenkontakte eingestellt wird und dessen Unterschreiten durch die Signalamplitude ein Kriterium dafür bildet, daß ein Raddurchgang stattgefunden hat.

Zur Erfassung der Geschwindigkeit des durchgefahrenen Rades ist neben der Kenntnis des genauen Abstandes zwischen beiden Schienenkontakten eine möglichst genaue Messung der Radlaufzeit auf dieser Strecke erforderlich. Diese Radlaufzeit wird durch die zwischen beiden Radabsenkungen liegende Zeitspanne wiedergegeben. Wie aus Fig. 1 ersichtlich, sind die Impulsverlaufskurven der Radabsenkungen nicht immer exakt parabelförmig und symmetrisch. Auch können ihre Minima unterschiedliche Amplitudenwerte aufweisen und die Schwellenwerte SW1, SW2 voneinander abweichen. Dies führt zu unterschiedlichen Zeitlagen der Triggerpunkte $t_1$, $t_2$ und $t_3$, $t_4$ und zu unterschiedlicher Breite der unterhalb der jeweiligen Schwellenwerte verlaufenden Teile der Impulsverlaufkurven. Selbst die zeitlichen Mitten der Radabsenkungen können aufgrund von z. B. störungsbedingten Unregelmäßigkeiten der Impulsverlaufskurven schwanken, so daß eine Zeitmessung zwischen den jeweiligen zeitlichen Mitten der Radabsenkungen ungenau ist.

Die Erfindung schafft hier eine Möglichkeit, den zeitlichen Abstand zwischen den beiden Radabsenkungen dennoch mit großer Genauigkeit zu messen, indem anstelle der störungsbeeinflußten Impulsverlaufskurven diesen optimal angenäherte Parabeln P1, P2 zur Bestimmung des Startpunktes und des Endpunktes für die Zeitmessung verwendet werden. Da diese Parabeln, wie oben bereits erwähnt, durch statistisch verteilte Unregelmäßigkeiten und Veränderungen der Amplitude des Impulsverlaufs-Minimums in ihrer Lage über der Zeitachse kaum beeinflußt werden, kann als ein sehr genauer Wert für die Radlaufzeit die Differenz der Koordinaten ts1, ts2 der Scheitelpunkte der beiden angenäherten Parabeln P1, P2 zur Berechnung der Radgeschwindigkeit benutzt werden. Dieser Wert läßt sich unmittelbar aus den Koeffizienten der optimal angepaßten Parabeln berechnen: Für die Parabeln

$$Y_{1,2}(t) = a_{1,2}t^2 + b_{1,2}t + c_{1,2}$$

ergibt sich die Laufzeit aus

$$T = \frac{b_1}{2a_1} - \frac{b_2}{2a_2}.$$

Die Geschwindigkeit wird damit d/T, wenn d der vorgegebene Abstand zwischen den Mitten der beiden Schienenkontakte ist.

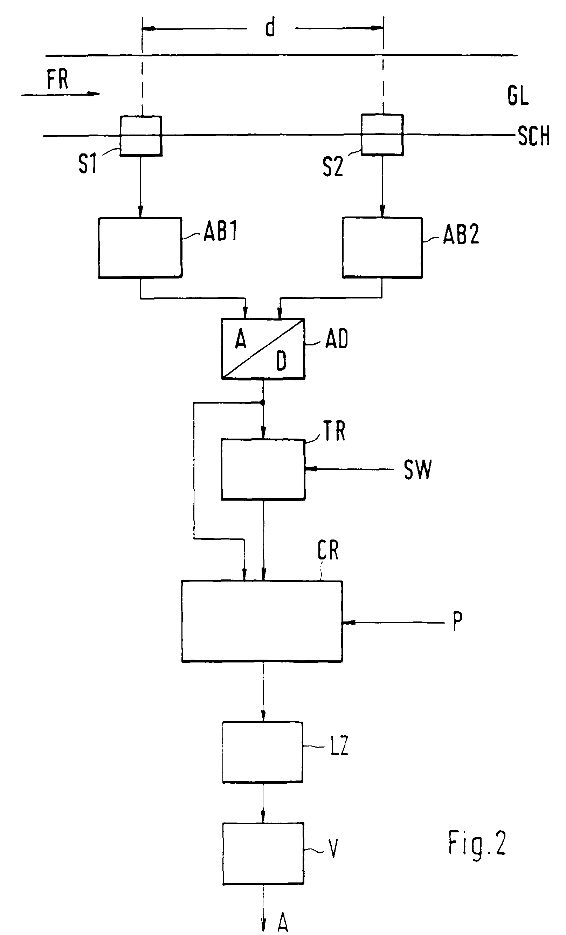

Das Ablaufschema in Fig. 2 zeigt zwei elektromagnetische Schienenkontakte S1, S2, die im Abstand d hintereinander an einer Schiene SCH eines Gleises GL angeordnet sind. Ein Rad eines in Fahrtrichtung FR fahrenden Eisenbahnfahrzeuges durchquert zuerst das Magnetfeld des SchienenKontaktes S1, dann das des Schienenkontaktes S2. Die von den Schienenkontakten ausgegebenen Ausgangssignale werden jeweils nach einem Aufbereitungsschritt AB1, AB2, in dem sie gegebenenfalls verstärkt und von anderen, nicht dargestellten Stromkreisen entkoppelt werden, einem A/D-Wandler AD zugeführt. An dessen Ausgang ist der Signalverlauf als Folge digitaler Amplitudenwerte entnehmbar.

Dieser digitale Signalverlauf wird einmal einer Triggerstufe TR zugeführt, wo er mit einem vorgegebenen, für beide Schienenkontakte gemeinsamen Schwellenwert SW verglichen wird, und wo zum Zeitpunkt des Unterschreitens des Schwellenwertes und zum Zeitpunkt des Wiedererreichens des Schwellenwertes nach vorheriger Unterschreitung Triggerimpulse gebildet werden, die einen Anpassungsrechner CR dazu veranlassen, den Signalverlauf während der Zeit zwischen den beiden Triggerimpulsen zu speichern.

Nach Durchgang des Rades verfügt der Rechner damit über zwei annähernd parabelförmige Stücke des Signalverlaufes, die dem Verlauf der Radimpulse unterhalb des Schwellenwertes SW entsprechen. Nun wird in einer Rechenoperation im Anpassungsrechner, das sogenannte "curve fitting" ausgeführt, in dem die Koeffizienten eines eine Parabel wiedergebenden Polynoms so lange variiert werden, bis die Parabel dem jeweiligen gespeicherten Signalverlauf optimal angepaßt ist. Als Kriterium hierfür kann z. B. das Minimum der zwischen Signalverlauf und angenäherter Parabel eingeschlossenen Restflächen dienen.

Nach Ermittlung der jeweils optimal angepaßten Parabeln erfolgt in zwei weiteren Rechenschritten LZ und V die Laufzeitberechnung und die Geschwindigkeitsberechnung wie weiter oben beschrieben. Die Radgeschwindigkeit steht schließlich an einem Ausgang A als digitaler Meßwert zur Weiterverarbeitung zur Verfügung.

Werden die beiden Schienenkontakte so nahe zueinander angeordnet, daß die Radabsenkungen einander zeitlich überlappen, so sollten alle Verfahrensschritte einschließlich des Vergleichs mit einem Schwellenwert SW in getrennten Kanälen ausgeführt werden, damit zwei getrennte Radabsenkungen erfaßt werden können. In diesem Falle können dann die in Fig. 1 dargestellten unterschiedlichen Schwellenwerte SW1, SW2 auftreten.

**Patentansprüche**

1. Verfahren zur Bestimmung der Geschwindigkeit eines Schienenfahrzeuges mittels einer Zeitmeßeinrichtung und mindestens zweier in bekanntem Wegeabstand (d) hintereinander an einer Schiene (SCH) oder, um den Wegeabstand (d) gegeneinander versetzt, an beiden Schienen eines Gleises (GL) angeordneter elektromagnetischer Schienenkontakte (S1, S2), die bei Durchgang eines Rades einen Impuls (RJ1, RJ2) ausgeben, der mit einem Schwellenwert (SW, SW1, SW2) verglichen und bei Über- oder Unterschreiten dieses Schwellenwertes als Kriterium dafür, daß ein Raddurchgang stattgefunden hat, angesehen und als Triggersignal der Zeitmeßeinrichtung (CR) zugeführt wird, und bei dem die Geschwindigkeit aus dem Wegeabstand d und der zwischen zwei an beiden Schienenkontakten unmittelbar aufeinanderfolgend festgestellten Raddurchgängen gemessenen Zeit berechnet wird, **dadurch gekennzeichnet,** daß der Verlauf (JV1, JV2) jedes bei einem Raddurchgang von einem Schienenkontakt (S1, S2) ausgegebenen Impulses (RJ1, RJ2) im Bereich jenseits der durch den Schwellenwert (SW1, SW2) gebildeten Schwelle in digitaler Form einem Rechner (CR) zugeführt wird, der den Impulsverlauf über der Zeitachse (t) aufzeichnet und an diesen in einer Rechenoperation eine Parabel (P1, P2) optimal annähert und daß der Rechner als Zeitmeßwert für die Geschwindigkeitsbestimmung die Zeitspanne zwischen den Zeitkoordinaten tS1, tS2 der Scheitelpunkte der den an den beiden Schienenkontakten erfaßten Impulsverläufen ($JV_1$, $JV_2$) angenäherten Parabeln (P1, P2) verwendet.

2. Verfahren nach Anspruch 1, dadurch gekennzeichnet, daß die zur Annäherung an den jeweiligen Impulsverlauf verwendeten Parabeln Parabeln zweiter Ordnung sind.

3. Verfahren nach Anspruch 1, dadurch gekennzeichnet, daß die zur Annäherung an den jeweiligen Impulsverlauf verwendeten Parabeln Parabeln dritter Ordnung sind.

4. Verfahren nach einem der vorstehenden Ansprüche, dadurch gekennzeichnet, daß für jeden Schienenkontakt zusätzlich der Kreuzkorrelationskoeffizient zwischen dem während eines Raddurchganges aufgezeichneten Impulsverlauf und der an diesen angenäherten Parabel berechnet und mit einem vorgegebenen Kreuzkorrelations-Sollwert verglichen wird und daß eine Geschwindigkeitsbestimmung nur dann als korrekt angesehen wird, wenn der berechnete Kreuzkorrelationskoeffizient in seinem Betrag den Kreuzkorrelations-Sollwert übersteigt.

5. Einrichtung zur Durchführung des Verfahrens nach Patentanspruch 1, gekennzeichnet durch mindestens einen A/D-Umsetzer (AD), dessen Eingang die Ausgangssignale zweier elektromagnetischer Schienenkontakte (S1, S2) zugeführt werden, eine Schwellwertschaltung (Triggerstufe TR), die die digitalisierten Ausgangssignale der Schienenkontakte mit einem Schwellenwert (SW) vergleicht und einem nachgeschalteten Rechner (CR) mit zugehörigen Speichern zur Abspeicherung von Signalverläufen, abhängig von Ausgangssignalen der Schwellenwertschaltung, zur Ausführung einer Anpassungsrechnung zwischen Radimpulse wiedergebenden Signalverläufen und jeweils vorgegebenen Parabeln, zur Bestimmung der Differenz der Zeitkoordinaten der Scheitelpunkte der optimal angepaßten Parabeln und zur Ausgabe eines aus dieser Differenz und einem vorgegebenen Abstand der Schienenkontakte voneinander berechneten Geschwindigkeitswertes.

## Claims

1. Process for determining the speed of a rail vehicle by means of a time measuring device and at least two electromagnetic rail contacts (S1, S2) arranged at a known distance (d) one behind the other on one rail (SCH) or offset from each other by the distance (d) on both rails of a track (GL), which electromagnetic rail contacts output a pulse (RJ1, RJ2) during the passage of a wheel, said pulse being compared to a threshold value (SW, SW1, SW2) and on overshooting or undershooting this threshold value is considered as the criterion that a wheel passage has occurred and is fed as the trigger signal to the time measuring device (CR), and in which process the speed is calculated from the distance d and the time measured between two immediately successive wheel passages determined at both rail contacts, **characterised in that** the waveform (JV1, JV2) of each pulse (RJ1, RJ2) output by a rail contact at a wheel passage in the area on the other side of the threshold formed by the threshold value (SW1, SW2) is fed in digital form to a computer (CR) which records the pulse waveform over the time axis (t) and in a calculation optimally approximates a parabola (P1, P2) to this pulse waveform, and that the computer uses as the time measurement value for the speed determination the time interval between the time co-ordinates tS1, tS2 of the vertices of the parabolas (P1, P2) approximated to the pulse waveforms (JV1, JV2) detected at the two rail contacts.

2. Process according to Claim 1, **characterised in that** the parabolas used for approximation to the respective pulse waveform are second-order parabolas.

3. Process according to Claim 1, **characterised in that** the parabolas used for approximation to the respective pulse waveform are third-order parabolas.

4. Process according to one of the preceding Claims, **characterised in that** for each rail contact, the cross-correlation coefficient between the pulse waveform recorded during a wheel passage and the parabola approximated to this pulse waveform is additionally calculated and compared to a predetermined cross-correlation setpoint value and that a speed determination is then only considered as correct when the absolute value of the calculated cross-correlation coefficient exceeds the cross-correlation setpoint value.

5. Device for implementing the process according to Claim 1, **characterised by** at least one A/D converter (AD), to whose input are fed the output signals of two electromagnetic rail contacts (S1, S2), a threshold circuit (trigger stage TR), which compares the digitised output signals of the rail contacts with a threshold value (SW) and a downstream computer (CR) with associated memories for storing signal waveforms, dependent upon output signals from the threshold circuit, for carrying out a correction calculation between signal waveforms reproducing wheel pulses and the respective predetermined parabolas, for determining the difference between the time co-ordinates of the vertices of the optimally matched parabolas and for outputting a speed value calculated from this difference and a predetermined distance between the rail contacts.

## Revendications

1. Procédé permettant la détermination de la vitesse d'un véhicule sur rails à l'aide d'un dispositif de mesure du temps et d'au moins deux contacts de rail (S1, S2) électromagnétiques qui sont disposés, à une distance (d) connue, l'un derrière l'autre sur un rail (SCH) ou décalés l'un par rapport à l'autre de la distance (d), sur deux rails d'une voie (GL) et qui, lors du passage d'une roue, émettent une impulsion (RJ1, RJ2) qui est comparée à une valeur de seuil (SW, SW1, SW2), qui, lors du dépassement vers le haut ou vers le bas de cette valeur de seuil, est considérée comme un critère permettant d'établir qu'un passage de roue a eu lieu, et qui est amenée au dispositif de mesure du temps (CR) comme signal de déclenchement, et dans lequel la vitesse est calculée à partir de la distance d et du temps mesuré entre deux passages de roue déterminés directement l'un à la suite de l'autre sur deux contacts de rail, caractérisé en ce que le tracé (JV1, JV2) de chaque impulsion (RJ1, RJ2) émise lors d'un passage de roue par un contact de rail (S1, S2), dans la plage au-delà du seuil formé par la valeur de seuil (SW1, SW2), est amené sous forme numérique à un ordinateur (CR) qui enregistre le tracé de l'impulsion sur l'axe du temps (t) et, par une opération de calcul, représente une approximation optimale dudit tracé sous la forme d'une parabole (P1, P2) et en ce que l'ordinateur utilise comme valeur de mesure du temps pour la détermination de la vitesse, l'intervalle de temps entre les coordonnées de temps tS1, tS2 des sommets de paraboles (P1, P2) qui sont une approximation des deux tracés d'impulsion ($JV_1$, $JV_2$) enregistrés sur les deux contacts de rail.

2. Procédé selon la revendication 1, caractérisé en ce que les paraboles utilisées pour l'approximation du tracé respectif de l'impulsion sont des paraboles de second ordre.

3. Procédé selon la revendication 1, caractérisé en ce que les paraboles utilisées pour l'approximation du tracé respectif de l'impulsion sont des paraboles de troisième ordre.

4. Procédé selon l'une des revendications précédentes, caractérisé en ce que, pour chaque contact de rail, le coefficient de corrélation croisée entre le tracé d'impulsion enregistré pendant un passage de roue et la parabole résultant d'une approximation dudit tracé est calculé en plus et comparé à une valeur de consigne prédéfinie de corrélation croisée et en ce qu'une détermination de la vitesse n'est considérée comme correcte que si le coefficient calculé de corrélation croisée dépasse, du point de vue de la valeur, la valeur de consigne de corrélation croisée.

5. Dispositif d'exécution du procédé selon la revendication 1, caractérisé en ce qu'il est prévu au moins un convertisseur analogique/numérique (AN) à l'entrée duquel sont amenés les signaux de sortie de deux contacts de rail (S1, S2) électromagnétiques, un circuit de la valeur de seuil (étage de déclenchement TR) qui compare les signaux de sortie numérisés des contacts de rail à une valeur de seuil (SW), et un ordinateur (CR) placé après et comportant des mémoires correspondantes pour le stockage des tracés de signal en fonction des signaux de sortie du circuit de la valeur de seuil, pour l'exécution d'un calcul d'ajustement entre les tracés de signaux reproduisant les impulsions de la roue et les paraboles respectivement prédéfinies, pour la détermination de la différence entre les coordonnées de temps des sommets des paraboles ajustées de façon optimale et pour l'émission d'une valeur de vitesse calculée à partir de cette différence et d'une distance prédéfinie entre les contacts de rail.

Fig.2